# EUROPÄISCHE PATENTSCHRIFT

(11) **EP 1 742 761 B1**
(45) Veröffentlichungstag und Bekanntmachung des Hinweises auf die Patenterteilung: **26.08.2015**
(21) Anmeldenummer: 05740009.5
(22) Anmeldetag: 21.04.2005
(51) Int. Cl.: B23P 11/02, H05B 6/14, B23B 31/117

(54) **Verfahren zum thermischen Aufweiten des Aufnahmeabschnitts eines Werkzeughalters und Dämpfungsadapter hierfür**
Method for the thermal widening of the holding section of a tool holder and damping adapter therefor
Méthode pour l'élargissement thermique de la section de rétention d'un porte-outil et adaptateur d'amortissement à cet effet

(30) Priorität: 23.04.2004 DE 102004019867
(43) Veröffentlichungstag der Anmeldung: 17.01.2007
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Weickmann & Weickmann
(86) Internationale Anmeldenummer: PCT/EP2005/004304
(87) Internationale Veröffentlichungsnummer: WO 2005/102595

(56) Entgegenhaltungen:
- EP-A- 1 002 605
- WO-A-01/89758
- US-A- 6 060 694
- US-A1- 2001 054 471

## Beschreibung

Die Erfindung betrifft ein Verfahren zum thermischen Aufweiten des Aufnahmeabschnitts eines Werkzeughalters mittels eines induktiven Schrumpfgeräts, sowie einen Dämpfungsadapter und einen Satz solcher Dämpfungsadapter hierfür.

Aus WO 01/89758 A1 oder US-A-2001/005 44 71 ist es bekannt Rotationswerkzeuge, beispielsweise Bohrer oder Fräser oder dergleichen mittels eines Schrumpfgeräts in eine zentrische Aufnahmeöffnung eines Werkzeughalters einzuschrumpfen. Die Aufnahmeöffnung ist in einem hülsenförmigen Aufnahmeabschnitt des Werkzeughalters vorgesehen und hat einen Nenndurchmesser, der etwas kleiner ist als der Durchmesser des in die Aufnahmeöffnung einzusetzenden Werkzeugschafts. Mittels einer im Betrieb den Aufnahmeabschnitt konzentrisch umschließenden Induktionsspulenanordnung kann der Aufnahmeabschnitt thermisch aufgeweitet werden, so dass der Werkzeugschaft in die Aufnahmeöffnung eingesetzt oder aus dieser wieder entnommen werden kann. Nach dem Abkühlen hält der Aufnahmeabschnitt den Werkzeugschaft im Presssitz drehfest eingeschrumpft.

US-A-2001/005 44 71 offenbart ein Verfahren zur thermischen Aufweitung eines mit einer zentrischen Aufnahmeöffnung für die Presssitzaufnahme eines Werkzeugschafts versehenen Aufnahmeabschnitts eines Werkzeughalters mittels einer den Aufnahmeabschnitt für dessen thermische Aufweitung konzentrisch umschließenden Induktionsspulenanordnung eines die Induktionsspulenanordnung mit Wechselstrom speisenden Schrumpfgeräts.

US-A-2001/005 44 71 offenbart weiter einen Adapter, der sich zur Dämpfung eignet, in Form einer aus nicht ferromagnetischem Metall bestehenden Hülse, wobei die Hülse mit ihrer inneren Umfangsfläche zumindest auf einen Teilbereich ihrer axialen Länge in flächigen Anlagekontakt zur äußeren Umfangsfläche des Aufnahmeabschnitts bringbar ist, wobei der innere Umfangsmantel der Hülse zumindest im Bereich des flächigen Anlagekontakts Konusform hat, wobei die Hülse mehrere die Hülse radial durchdringende, im Wesentlichen axial über zumindest einen Teil der axialen Länge der Hülse sich erstreckende Schlitze enthält, und wobei die Schlitze der Hülse in Umfangsrichtung paarweise diametral sich gegenüberliegend angeordnet sind.

Das Schrumpfgerät speist die Induktionsspulenanordnung mit hochfrequentem Wechselstrom oder gepulstem Gleichstrom, wobei eine Steuerung die Stromstärke oder/und die Frequenz oder/und die Einschaltdauer vorgibt, um einerseits für eine hinreichende Erwärmung des Aufnahmeabschnitts zu sorgen, andererseits aber eine unerwünschte Überhitzung zu verhindern.

Üblicherweise müssen an dem Schrumpfgerät diese Energiezuführungsdaten abhängig vom Typ des zu erwärmenden Werkzeughalters eingestellt werden. Soweit Werkzeugschäfte mit vergleichsweise großem Durchmesser ein- bzw. ausgespannt werden sollen, sind die an dem Schrumpfgerät einzustellenden Parameter vergleichsweise unkritisch, so dass mit ein und derselben Einstellung auch Werkzeughalter aus einem vorbestimmten Größenbereich thermisch aufgeweitet werden können. Kritisch hingegen sind Werkzeughalter mit relativ dünnwandigem Aufnahmeabschnitt, wie sie insbesondere zum Spannen von Werkzeugschäften mit einem Durchmesser von nur wenigen Millimetern, beispielsweise drei bis sechs Millimetern vorgesehen sind. Bei solchen Werkzeughaltern mit dünnwandigem Aufnahmeabschnitt müssen die Energieeinstellparameter des Schrumpfgeräts exakt eingehalten werden. Bei solchen Werkzeughaltern kommt hinzu, dass sie sich in ihren Größenabmessungen nur wenig unterscheiden, so dass auf die an den Werkzeughaltern angebrachten Typenbezeichnungen exakt geachtet werden muss. Dies erschwert den Schrumpfbetrieb, insbesondere wenn aufeinanderfolgend Werkzeughalter unterschiedlicher Größe geschrumpft werden sollen.

Es ist Aufgabe der Erfindung einen Weg zu zeigen, wie die Gefahr einer Überhitzung empfindlicher Werkzeughalter, insbesondere von Werkzeughaltern mit dünnwandigem Aufnahmeabschnitt verringert werden kann.

Diese Aufgabe wird durch ein Verfahren gemäß Anspruch 1 gelöst. Für die Durchführung des Verfahrens geeignete Dämpfungsadapter sowie hierfür geeignete Sätze solcher Dämpfungsadapter sind in den Ansprüchen 2 bzw. 6 beansprucht. Ein geeigneter Dämpfungsadapter hat die Form einer aus nicht ferromagnetischem Metall bestehenden Hülse zum betriebsmäßig losen Einfügen radial zwischen einen mit einer zentrischen Aufnahmeöffnung für die Presssitzaufnahme eines Werkzeugschafts versehenen Aufnahmeabschnitt eines Werkzeughalters und einer den Aufnahmeabschnitt für dessen thermische Aufweitung konzentrisch umschließenden Induktionsspulenanordnung eines die Induktionsspulenanordnung mit Wechselstrom speisenden Schrumpfgeräts.

Üblicherweise ist die Leistung des Schrumpfgeräts so groß bemessen, dass sie in der Lage ist Werkzeughalter für Werkzeugschäfte bis zu einigen 10 Millimetern, beispielsweise bis zu 50 Millimetern Durchmesser hinreichend rasch induktiv zu erwärmen, um den Werkzeugschaft nicht nur einzuspannen, sondern auch aus dem Werkzeughalter wieder auszuspannen. Es hat sich gezeigt, dass mit einer aus nicht ferromagnetischem Metall und damit magnetisch nicht leitenden Hülse der Magnetfluss in dem üblicherweise aus ferromagnetischem Material, wie zum Beispiel Stahl bestehenden Aufnahmeabschnitt des Werkzeughalters soweit gedämpft werden kann, dass eine unerwünschte Überhitzung des Aufnahmeabschnitts vermieden werden kann, selbst wenn die Energieparameter des Schrumpfgeräts nicht exakt adaptiert wurden. Da die Hülse aus Metall besteht, werden in ihr Wirbelströme induziert, die den Magnetfluss in dem Aufnahmeabschnitt schwächen. Bevorzugt liegt die Hülse hierbei mit ihrer inneren Umfangsfläche zumindest auf einem Teilbereich ihrer axialen Länge in flächigem Anlagekontakt zur äußeren Umfangsfläche des Aufnahmeabschnitts, so dass sie in gewissem Ausmaß aus dem Aufnahmeabschnitt Wärme ableitet. Es hat sich herausgestellt, dass die Wirbelstromerwärmung der Hülse geringer ist als die Wirbelstromerwärmung des den Hauptteil des magnetischen Flusses führenden, ferromagnetischen Aufnahmeabschnitts des Werkzeughalters. Zweckmäßigerweise hat der innere Umfangsmantel der Hülse zumindest im Bereich des flächigen Anlagekontakts Konusform entsprechend der Form des üblicherweise gleichfalls konischen Aufnahmeabschnitts.

Um die Hülse reproduzierbar in gleicher Position an dem Aufnahmeabschnitt des Werkzeughalters anbringen zu können, hat die Hülse an ihrem der Einsteckseite des Werkzeugschafts benachbarten axialen Ende einen radial nach innen vorstehenden Anschlag, mit dem die Hülse an einer Stirnfläche des Aufnahmeabschnitts axial positioniert werden kann. Nicht zuletzt kann die Induktionsspulenanordnung mit einem ähnlichen axialen Anschlag dann an der solchermaßen axial positionierten Hülse ihrerseits axial positioniert werden, um reproduzierbare Induktionsbedingungen zu erreichen.

Die Hülse besteht zweckmäßigerweise aus Kupfer oder Aluminium oder einer Legierung eines dieser Metalle, um hinreichende Wärmeleiteigenschaften zu erreichen.

Die Dämpfungseigenschaften der Hülse lassen sich auf vielfältige Weise variieren. Zum einen kann die Wandstärke der Hülse variiert werden. Die Hülse hat mehrere die Hülse radial durchdringenden, im Wesentlichen axial über zumindest einen Teil der axialen Länge der Hülse sich erstreckenden Schlitz. Der Schlitz öffnet die Wand der Hülse für den magnetischen Fluss, so dass über die axiale Länge des Schlitzes und dessen Breite in Umfangsrichtung die Bedämpfung des magnetischen Flusses gesteuert werden kann. Die Länge und Breite des Schlitzes begrenzt darüber hinaus die Anlagefläche, in der die Hülse in Anlagekontakt zum Aufnahmeabschnitt des Werkzeughalters steht und damit den Kühleinfluss, den die Hülse auf den Aufnahmeabschnitt hat.

Um die Wärme übertragende Kontaktfläche zwischen der Hülse und dem Aufnahmeabschnitt noch besser variieren zu können, ist die Hülse bevorzugt an ihrer inneren Umfangsfläche in wenigstens einem axialen Teilabschnitt mit einer Ringaussparung versehen. Da die Hülse geschlitzt ist hat sie radial elastische Eigenschaften und kann sich deshalb besser dem Umfang des Aufnahmeabschnitts anpassen, was die Wärmeübertragungseigenschaften verbessert.

Um die Dämpfungseigenschaften der Hülse gleichmäßig auf den Umfang des Aufnahmeabschnitts zu verteilen, enthält die Hülse bevorzugt mehrere in gleichen Winkelabständen in Umfangsrichtung verteilt angeordnete Schlitze. Bevorzugt sind die Schlitze in Umfangsrichtung paarweise diametral sich gegenüberliegend angeordnet, insbesondere so, dass die Schlitze die Hülse in Umfangsrichtung abwechselnd von sich axial gegenüberliegenden Enden der Hülse ausgehend über einen Teil ihrer axialen Länge durchdringen. Solche Schlitze erzeugen eine meanderförmige Umfangsstruktur der Hülse, die sich besonders gut dem äußeren Umfang des Aufnahmeabschnitts anpassen kann.

Um nach der thermischen Erwärmung den Aufnahmeabschnitt des Werkzeughalters möglichst rasch wieder abkühlen zu können, ist es bekannt auf den Aufnahmeabschnitt eine Kühlmanschette aufzusetzen. Bei der Kühlmanschette kann es sich um einen einfachen, luftgekühlten Kühlkörper mit Kühlrippen handeln. Die Kühlmanschette kann aber auch, wie dies im Einzelnen aus WO 01/89758 A1 bekannt ist an einen Flüssigkeitskühlkreislauf angeschlossen sein. In einer bevorzugten Ausgestaltung hat die äußere Umfangsfläche der Hülse Konusform und erlaubt so das Aufsetzen der Kühlmanschette.

Unter einem zweiten Aspekt betrifft die Erfindung einen aus mehreren der vorstehend erläuterten Dämpfungsadapter bestehenden Adaptersatz, der einem Satz unterschiedlicher Werkzeughalter zugeordnet ist. Die Hülsen eines solchen Adaptersatzes sind zum Aufsetzen auf den Aufnahmeabschnitt von Werkzeughaltern mit voneinander verschiedenen Außenkonturen der Aufnahmeabschnitte oder/und voneinander unterschiedlichen Innendurchmessern der Aufnahmeöffnungen bemessen und sind so gestaltet, dass die Aufnahmeabschnitte der mit den zugeordneten Hülsen versehenen Werkzeughaltern mit jeweils gleicher Wechselstrom-Speiseeinstellung des Schrumpfgeräts thermisch aufweitbar sind. Sämtliche dem Satz zugeordneten Werkzeughalter können mit ein und derselben Energieparametereinstellung des Schrumpfgeräts thermisch geweitet werden, da die Dämpfungs- und Kühleigenschaften der Hülsen so dimensioniert sind, dass der Magnetfluss in dem Aufnahmeabschnitt die für den einzelnen Werkzeughalter vorbestimmten Grenzen einhält. Hierzu werden die Wanddicken der Hülsen oder/und die Anzahl der Schlitze oder/und die axialen Längen der Schlitze oder/und die Breiten der Schlitze in Umfangsrichtung der Hülse oder/und die Abmessungen der in den inneren Umfangsflächen der Hülsen vorgesehenen Ringaussparungen so gewählt, dass die Aufnahmeabschnitte der mit den zugeordneten Hülsen versehenen Werkzeughalter hinreichend, jedoch überhitzungsfrei thermisch aufgeweitet werden können. Die vorstehend erläuterten Abmessungsparameter können hierbei durch einige wenige Versuche empirisch ermittelt werden.

Zweckmäßigerweise haben hierbei sämtliche Hülsen des Satzes äußere Umfangsflächen mit gleicher Kontur und gleichem Durchmesser, so dass auch ein und dieselbe Kühlmanschette für die Kühlung der thermisch aufgeweiteten Werkzeughalter eingesetzt werden kann.

Im Folgenden wird die Erfindung anhand einer Zeichnung näher erläutert. Hierbei zeigt:
Fig. 1 einen Werkzeughalter von Schrumpftyp mit aufgesetztem Dämpfungsadapter in einem Schrumpfgerät;
Fig. 2 den Werkzeughalter mit aufgesetztem Dämpfungsadapter und aufgesetzter Kühlmanschette;
Fig. 3 einen Axiallängsschnitt durch den Dämpfungsadapter, gesehen entlang einer Linie III-III in Fig. 4 und
Fig. 4 eine Draufsicht auf den Dämpfungsadapter, gesehen in Richtung eines Pfeils IV in Fig. 3.

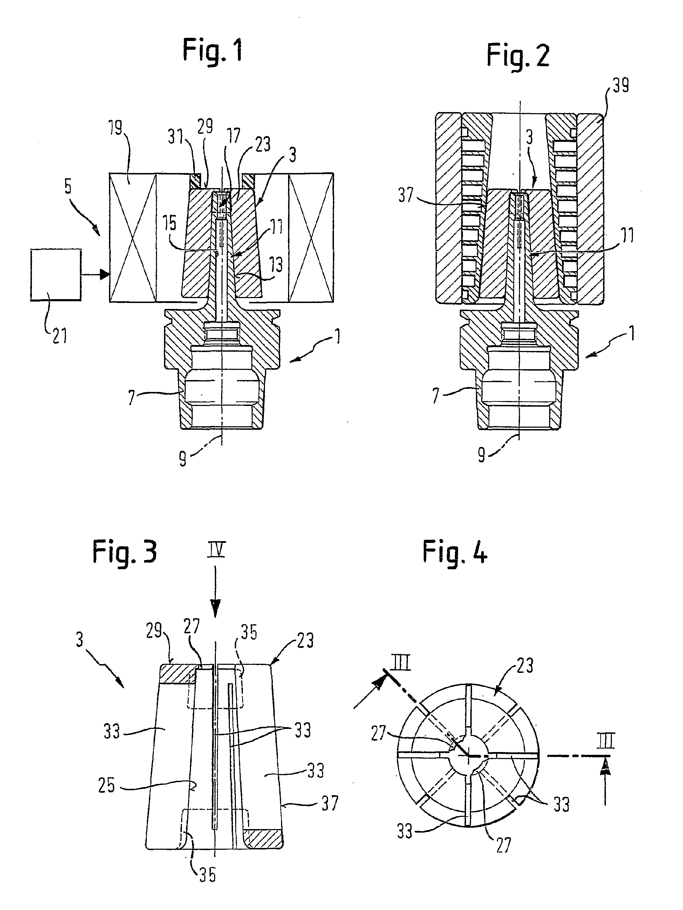

Fig. 1 zeigt einen Werkzeughalter 1 mit einem ihm zugeordneten, nachfolgend noch näher erläuterten Dämpfungsadapter 3 in einer Schrumpfbetriebsstellung eines allgemein mit 5 bezeichneten Schrumpfgeräts. Ein solches Schrumpfgerät ist beispielsweise in WO 01/89758 A1 im Einzelnen beschrieben.

Der Werkzeughalter 1 hat einen genormten Kupplungsabschnitt 7, mit der er drehfest und axial positioniert mit der rotierenden Spindel einer Werkzeugmaschine kuppelbar ist sowie zentrisch zu seiner Drehachse 9 einen hülsenförmigen Aufnahmeabschnitt 11 mit einer konischen, äußeren Umfangsfläche 13 und einer zentrischen Aufnahmeöffnung 15, deren Durchmesser in einem für die Aufnahme des Schafts eines nicht näher dargestellten Rotationswerkzeugs, beispielsweise eines Bohrers oder Fräsers bestimmten Spannbereich 17 etwas kleiner ist als der Durchmesser des Werkzeugschafts.

Der Aufnahmeabschnitt 11 des Werkzeughalters 1 besteht aus ferromagnetischem Material, beispielsweise wärmefestem Stahl, so dass er den Magnetfluss einer für den Schrumpfbetrieb den Aufnahmeabschnitt 11 koaxial umschließenden Induktionsspulenanordnung 19 konzentriert, wenn die Induktionsspulenanordnung 19 aus einem Wechselstromgenerator 21 mit hochfrequentem Wechselstrom wählbarer Stärke gespeist wird. Der Magnetfluss induziert in dem Aufnahmeabschnitt 11 Wirbelströme, die den Aufnahmeabschnitt 11 erwärmen und damit thermisch auf einen Innendurchmesser der Aufnahmeöffnung 15 größer als dem Durchmesser des Werkzeugschafts aufweiten. Der Werkzeugschaft kann in die erweiterte Aufnahmeöffnung 15 eingesetzt oder aus dieser entnommen werden. Nach dem Abkühlen des Aufnahmeabschnitts 11 sitzt der in die Aufnahmeöffnung 15 eingesteckte Werkzeugschaft im Presssitz fest.

Die Stärke des vom Generator 21 gelieferten Wechselstroms, die Zeitspanne, in der der Wechselstrom die Induktionsspulenanordnung 19 speist und gegebenenfalls die Frequenz des Wechselstroms bestimmt die dem Aufnahmeabschnitt 11 zugeführte Induktionsenergie und damit die Geschwindigkeit, mit der sich der Aufnahmeabschnitt 11 aufweitet sowie die Temperatur des Aufnahmeabschnitts 11 und damit den erreichten aufgeweiteten Durchmesser der Aufnahmeöffnung 15. Insbesondere bei einem dünnwandigen Aufnahmeabschnitt 11, wie ihn Fig. 1 zeigt, müssen die vorstehenden Parameter exakt eingehalten werden, um einerseits eine hinreichende Aufweitung der Aufnahmeöffnung 15 zu erreichen und andererseits eine Überhitzung des Aufnahmeabschnitts 11, die zur Zerstörung des Werkzeughalters 1 führen kann, zu vermeiden. Die Parameter müssen deshalb bei herkömmlichen Schrumpfgeräten einzeln dem jeweiligen Typ des Werkzeughalters 1 angepasst werden und zwar auch dann, wenn es sich um Werkzeughalter handelt, die sich in den Abmessungen ihrer Aufnahmeabschnitte bzw. Aufnahmeöffnungen nur wenig unterscheiden. Insbesondere, wenn unterschiedliche Werkzeughalter aus einem Satz ähnlicher Werkzeughalter aufeinanderfolgend geschrumpft werden sollen, bedarf die Einstellung des Schrumpfgeräts erhöhter Achtsamkeit. Um die Bedienung des Schrumpfgeräts in einem solchen Fall zu vereinfachen ist gemäß der Erfindung jedem der Werkzeughalter 1 des Satzes ein gesonderter Dämpfungsadapter 3 zugeordnet, dessen Dämpfungseigenschaften in nachfolgend noch näher erläuterter Weise so bemessen sind, dass sämtliche Werkzeughalter 1 des Satzes bei Verwendung des jeweils zugeordneten Dämpfungsadapters 3 mit ein und derselben Energieeinstellung des Schrumpfgeräts 5 induktiv erwärmt werden können. Der Dämpfungsadapter 3 justiert den auf den Aufnahmeabschnitt 11 wirkenden Magnetfluss so, dass sich einerseits die Aufnahmeöffnung 15 hinreichend aufweitet und andererseits eine Überhitzung des Aufnahmeabschnitts 11 vermieden wird.

Der Dämpfungsadapter 3 hat generell die Form einer Hülse 23 und besteht aus einem nicht ferromagnetischen, das heißt magnetisch nicht leitenden Metall, wie zum Beispiel Kupfer oder vorzugsweise Aluminium oder einer Legierung eines dieser Metalle. Wie am besten die Fig. 3 und 4 zeigen, hat die innere Umfangsfläche 25 der Hülse 23 die Form eines Konus, die der Konusfläche 13 des Aufnahmeabschnitts 11 für einen flächigen Anlagekontakt angepasst ist. Dem Werkzeugeinsteckende des Aufnahmeabschnitts 11 benachbart hat die Hülse 23 an ihrem entsprechenden axialen Ende nach radial innen vorstehende Anschlagnasen 27, die die Hülse 23 an der axialen Stirn des Aufnahmeabschnitts 11 axial positionieren und für eine definierte Lage der Hülse 23 relativ zum Aufnahmeabschnitt 11 sorgen. Die den Anschlagnasen 27 benachbarte Stirn 29 erlaubt, wie dies Fig. 1 schematisch zeigt, die axiale Positionierung der Induktionsspulenanordnung 19 relativ zum Aufnahmeabschnitt 11 über einen spulenseitigen Anschlag 31.

In der Umfangswand der Hülse 23 sind in Umfangsrichtung gleichmäßig verteilt mehrere, hier acht Schlitze 33 enthalten, die die Hülse 23 radial durchdringen, sich jedoch in axialer Richtung nur über einen Teilabschnitt der axialen Länge der Hülse 23 erstrecken. Im dargestellten Ausführungsbeispiel liegen sich die Schlitze 33 jeweils paarweise diametral gegenüber, wobei in Umfangsrichtung benachbarte Schlitze 33 jeweils von unterschiedlichen axialen Stirnflächen der Hülse 23 ausgehen, die jeweils andere Stirnfläche jedoch nicht erreichen. Die Hülse 23 hat damit insgesamt eine meanderförmige radial elastische Wandstruktur, die es ihr erlaubt sich der äußeren Umfangsfläche 13 des Aufnahmeabschnitts 11 elastisch flächig anzupassen.

Das Dämpfungsverhalten des Dämpfungsadapters 3 wird durch die Wanddicke der Hülse 23, durch die Anzahl, die axiale Länge und die Breite der Schlitze 33 in Umfangsrichtung sowie gegebenenfalls durch ringförmige Aussparungen in der inneren Umfangsfläche 25 bestimmt, wie sie in Fig. 3 bei 35 im Bereich der axialen Enden der Hülse 23 angedeutet sind. Durch geeignete Wahl dieser Bemessungsparamter können die den einzelnen Werkzeughaltern 1 des Satzes zugeordneten Dämpfungsadapter 3 so dimensioniert werden, dass der Schrumpfvorgang für sämtliche Werkzeughalter 1 des Satzes mit ein und derselben Einstellung der Energie bestimmenden Parameter des Schrumpfgeräts 5 durchgeführt werden kann.

Sämtliche Dämpfungsadapter 3 des Satzes haben eine konusförmige äußre Umfangsfläche 37 mit innerhalb des Satzes gleichen Abmessungen und gleichem Konuswinkel, so dass zur Kühlung des thermisch aufgeweiteten Werkzeughalters 1 ein und dieselbe Kühlmanschette 39 auf den noch vom Schrumpfvorgang auf dem Aufnahmeabschnitt 11 sitzenden Dämpfungsadapter einheitlich für alle Werkzeughalter 1 des Satzes aufgesetzt werden kann (Fig. 2). Im dargestellten Ausführungsbeispiel ist die Kühlmanschette 39 als an einem Flüssigkeitskreislauf anschließbare Manschette ausgebildet, wie dies in WO 01/89758 A1 im Einzelnen erläutert ist. Luftgekühlte Kühlkörper sind gleichfalls verwendbar.

## Patentansprüche

1. Verfahren zur thermischen Aufweitung eines mit einer zentrischen Aufnahmeöffnung (15) für die Presssitzaufnahme eines Werkzeugschafts versehenen Aufnahmeabschnitts (11) eines Werkzeughalters (1) mittels einer den Aufnahmeabschnitt (11) für dessen thermische Aufweitung konzentrisch umschließenden Induktionsspulenanordnung (19) eines die Induktionsspulenanordnung (19) mit Wechselstrom speisenden Schrumpfgeräts (5), wobei
für die thermische Aufweitung ein Dämpfungsadapter in Form einer aus nicht ferromagnetischem Metall bestehenden Hülse (23) radial zwischen dem Aufnahmeabschnitt (11) des Werkzeughalters (1) und der den Aufnahmeabschnitt (11) konzentrisch umschließenden Induktionsspulenanordnung (19) betriebsmäßig lose eingefügt wird.

2. Dämpfungsadapter in Form einer aus nicht ferromagnetischem Metall bestehenden Hülse (23) zum betriebsmäßig losen Einfügen radial zwischen einen mit einer zentrischen Aufnahmeöffnung (15) für die Presssitzaufnahme eines Werkzeugschafts versehenen Aufnahmeabschnitt (11) eines Werkzeughalters (1) und einer den Aufnahmeabschnitt (11) für dessen thermische Aufweitung konzentrisch umschließenden Induktionsspulenanordnung (19) eines die Induktionsspulenanordnung (19) mit Wechselstrom speisenden Schrumpfgeräts (5), wobei die Hülse (23) mit ihrer inneren Umfangsfläche (25) zumindest auf einen Teilbereich ihrer axialen Länge in flächigen Anlagekontakt zur äußeren Umfangsfläche (13) des Aufnahmeabschnitts (11) bringbar ist, wobei der innere Umfangsmantel (25) der Hülse (23) zumindest im Bereich des flächigen Anlagekontakts Konusform hat, wobei die Hülse (23) mehrere die Hülse (23) radial durchdringende, im Wesentlichen axial über zumindest einen Teil der axialen Länge der Hülse (23) sich erstreckende Schlitze (33) enthält,
wobei die Schlitze (33) in Umfangsrichtung paarweise diametral sich gegenüberliegend angeordnet sind und/oder die Schlitze (33) die Hülse (23) in Umfangsrichtung abwechselnd von axial sich gegenüberliegenden Enden der Hülse (23) ausgehend über einen Teil ihrer axialen Länge durchdringen,
und wobei die Hülse (23) an ihrem der Einsteckseite des Werkzeugschafts benachbarten axialen Ende einen radial nach innen vorstehenden Anschlag (27) hat, mit dem die Hülse (23) an einer Stirnfläche des Aufnahmeabschnitts (11) axial positionierbar ist.

3. Dämpfungsadapter nach Anspruch 2,
**dadurch gekennzeichnet, dass** die Hülse (23) an ihrer inneren Umfangsfläche (25) in wenigstens einem axialen Teilabschnitt mit einer Ringaussparung (35) versehen ist.

4. Dämpfungsadapter nach Anspruch 2 oder 3,
**dadurch gekennzeichnet, dass** die Hülse (23) aus Kupfer oder Aluminium oder einer Legierung eines dieser Metalle besteht.

5. Dämpfungsadapter nach einem der Ansprüche 2 bis 4,
**dadurch gekennzeichnet, dass** die äußere Umfangsfläche (37) der Hülse (23) Konusform hat zum Aufsetzen einer Kühlmanschette (39).

6. Adaptersatz mit mehreren als Hülsen (23) ausgebildeten Dämpfungsadaptern (3) gemäß einem der Ansprüche 2 bis 5,
**dadurch gekennzeichnet, dass** die Hülsen (23) zum Aufsetzen auf den Aufnahmeabschnitt (11) von Werkzeughaltern (1) mit voneinander verschiedenen Außenkonturen der Aufnahmeabschnitte (11) oder/und voneinander verschiedenen Innendurchmessern der Aufnahmeöffnungen (15) bemessen sind und dass die Wanddicken der Hülsen (23), oder/und die Anzahl der Schlitze (33) oder/und die axialen Längen der Schlitze (33) oder/und die Breiten der Schlitze (33) in Umfangsrichtung der Hülse (23) oder/und die Abmessungen der in den inneren Umfangsflächen (25) der Hülsen (23) vorgesehenen Ringaussparungen (35) derart gewählt sind, dass die Aufnahmeabschnitte (11) der mit den zugeordneten Hülsen (23) versehenen Werkzeughalter (1) des Satzes mit jeweils gleicher Wechselstrom-Speiseeinstellung des Schrumpfgeräts (5) thermisch aufweitbar sind.

7. Adaptersatz nach Anspruch 6,
**dadurch gekennzeichnet, dass** die Hülsen (23) äußere Umfangsflächen (37) mit gleicher Kontur und gleichem Durchmesser haben.

## Claims

1. Method for thermally expanding a receiving portion (11) of a tool holder (1) which is provided with a central receiving opening (15) for receiving a tool shank in a press fit by means of a induction coil arrangement (19) of a shrink device (5) which supplies the induction coil arrangement (19) with alternating current, said arrangement concentrically surrounding the receiving portion (11) in order to thermally expand it, wherein, for thermal expansion, an attenuation adapter in the form of a sleeve (23) made of non-ferromagnetic metal is radially inserted between the receiving portion (11) of the tool holder (1) and the induction coil arrangement (19), which concentrically surrounds the receiving portion (11), in a loose manner for the purpose of operation.

2. Attenuation adapter in the form of a sleeve (23) made of a non-ferromagnetic metal to be radially inserted, in a loose manner for the purpose of operation, between a receiving portion (11) of a tool holder (1) provided with a central receiving opening (15) for receiving a tool shank in a press fit and an induction coil arrangement (19) of a shrink device (5) which supplies the induction coil arrangement (19) with alternating current, which arrangement concentrically surrounds the receiving portion (11) in order to thermally expand it,
wherein at least a portion of the axial length of the inner circumferential surface (25) of the sleeve (23) can be brought into surface contact with the external circumferential surface (13) of the receiving portion (11),
wherein at least the region of the surface contact of the inner circumferential surface (25) of the sleeve (23) is conical,
wherein the sleeve (23) comprises a plurality of slits (33) which radially penetrate the sleeve (23) and extend substantially axially over at least part of the axial length of the sleeve (23), wherein the slits (33) are arranged in pairs in the circumferential direction so as to be diametrically opposite one another, and/or the slits (33) alternately penetrate the sleeve (23), across part of the axial length thereof, in the circumferential direction starting from axially opposite ends of the sleeve (23),
and wherein the axial end of the sleeve (23) which is adjacent to the insertion side of the tool shank has a stop (27) which protrudes radially inwards and is used to axially position the sleeve (23) on an end face of the receiving portion (11).

3. Attenuation adapter according to claim 2, **characterised in that** an annular recess (35) is provided in at least one axial portion of the inner circumferential surface (25) of the sleeve (23).

4. Attenuation adapter according to either claim 2 or claim 3, **characterised in that** the sleeve (23) consists of copper or aluminium or an alloy of one of these metals.

5. Attenuation adapter according to any of claims 2 to 4, **characterised in that** the outer circumferential surface (37) of the sleeve (23) is conical for the purpose of attaching a cooling collar (39).

6. Adapter set comprising a plurality of attenuation adapters (3), in the form of sleeves (23), according to any of claims 2 to 5, **characterised in that** the sleeves (23) to be attached to the receiving portion (11) of tool holders (1) having different outer contours of the receiving portion (11) and/or different inner diameters of the receiving openings (15) are measured, and **in that** the wall thicknesses of the sleeves (23) and/or the number of slits (33) and/or the axial lengths of the slits (33) and/or the widths of the slits (33) in the circumferential direction of the sleeve (23) and/or the dimensions of the annular recesses (35) made in the inner circumferential surfaces (25) of the sleeves (23) are selected such that the receiving portions (11) of the tool holder (1), which is provided with the associated sleeves (23), of the set can each be thermally expanded using the same alternating current supply setting from the shrink device (5).

7. Adapter set according to claim 6, **characterised in that** the sleeves (23) have outer circumferential surfaces (37) which have the same contour and the same diameter.

## Revendications

1. Procédé servant à l'élargissement thermique d'une section de réception (11), pourvue d'une ouverture de réception (15) centrée en vue de recevoir avec un ajustement serré une tige d'outil, d'un porte-outil (1) au moyen d'un ensemble de bobines d'induction (19), renfermant de manière concentrique la section de réception (11) en vue de l'élargissement thermique de celle-ci, d'un appareil de frettage (5) alimentant l'ensemble de bobines d'induction (19) en courant alternatif,
sachant que, en vue de l'élargissement thermique, un adaptateur d'amortissement se présentant sous la forme d'une douille (23) constituée d'un métal non ferromagnétique est inséré, de manière lâche opérationnellement, radialement entre la section de réception (11) du porte-outil (1) et l'ensemble de bobines d'induction (19) renfermant de manière concentrique la section de réception (11).

2. Adaptateur d'amortissement se présentant sous la forme d'une douille (23) constituée d'un métal non ferromagnétique, destiné à être inséré, de manière lâche opérationnellement, radialement entre une section de réception (11), pourvue d'une ouverture de réception (15) centrée en vue de la réception avec un ajustement serré d'une tige d'outil, d'un porte-outil (1) et un ensemble de bobines d'induction (19), renfermant de manière concentrique la section de réception (11) en vue de l'élargissement thermique de celle-ci, d'un appareil de frettage (5) alimentant l'ensemble de bobines d'induction (19) en courant alternatif,
sachant que la douille (23) peut être amenée, par sa surface périphérique intérieure (25), au moins sur une zone partielle de sa longueur axiale, en contact à plat par appui par rapport à la surface périphérique extérieure (13) de la section de réception (11),
sachant que l'enveloppe périphérique intérieure (25) de la douille (23) présente, au moins dans la zone du contact à plat par appui, une forme conique,
sachant que la douille (23) contient plusieurs entailles (33) traversant de manière radiale la douille (23), s'étendant essentiellement de manière axiale au-dessus au moins d'une partie de la longueur axiale de la douille (23),
sachant que les entailles (33) sont disposées de manière diamétralement opposée par paire dans le sens périphérique et/ou que les entailles (33) traversent la douille (23) dans le sens périphérique, en partant en alternance des extrémités axialement opposées de la douille (23), sur une partie de sa longueur axiale
et sachant que la douille (23) a, au niveau de son extrémité axiale adjacente au côté d'insertion de la tige d'outil, une butée (27) faisant saillie radialement vers l'intérieur, à l'aide de laquelle la douille (23) peut être positionnée de manière axiale au niveau d'une surface frontale de la section de réception (11).

3. Adaptateur d'amortissement selon la revendication 2,
**caractérisé en ce que** la douille (23) est pourvue, au niveau de sa surface périphérique intérieure (25), dans au moins une section partielle axiale, d'un évidement annulaire (35).

4. Adaptateur d'amortissement selon la revendication 2 ou 3,
**caractérisé en ce que** la douille (23) est constituée de cuivre ou d'aluminium ou d'un alliage d'un desdits métaux.

5. Adaptateur d'amortissement selon l'une quelconque des revendications 2 à 4,
**caractérisé en ce que** la surface périphérique extérieure (37) de la douille (23) a une forme conique destinée à accueillir une manchette de refroidissement (39).

6. Jeu d'adaptateurs comprenant plusieurs adaptateurs d'amortissement (3) réalisés sous la forme de douilles (23) selon l'une quelconque des revendications 2 à 5,
**caractérisé en ce que** les douilles (23) destinées à être posées sur la section de réception (11) de porte-outils (1) sont dimensionnées avec des contours extérieurs différents les uns des autres des sections de réception (11) et/ou avec des diamètres intérieurs différents les uns des autres des ouvertures de réception (15), et **en ce que** les épaisseurs de paroi des douilles (23) et/ou le nombre des entailles (33) et/ou les longueurs axiales des entailles (33) et/ou les largeurs des entailles (33) dans le sens périphérique de la douille (23) et/ou les dimensions des évidements annulaires (35) prévus dans les surfaces périphériques intérieures (25) des douilles (23) sont choisis de telle manière que les sections de réception (11) des porte-outils (1), pourvus des douilles (23) associées, du jeu peuvent être élargies thermiquement avec respectivement un réglage identique de l'alimentation en courant alternatif par l'appareil de frettage (5).

7. Jeu d'adaptateurs selon la revendication 6, **caractérisé en ce que** les douilles (23) ont des surfaces périphériques extérieures (37) présentant un contour identique et un diamètre identique.
